# EUROPEAN PATENT APPLICATION

(11) **EP 3 023 457 A1**
(43) Date of publication of application: **25.05.2016**
(21) Application number: 15182666.6
(22) Date of filing: 27.08.2015
(51) Int. Cl.: C08L 1/00, D21B 1/02, D21B 1/32, C08L 95/00

(54) **A REJECT BASED COMPONENT, A METHOD FOR PRODUCING A REJECT BASED COMPONENT, A PELLETIZED COMPONENT AND A FINAL PRODUCT**

(30) Priority: 24.11.2014 FI 20146026
(71) Applicant: UPM-Kymmene Corporation, 00100 Helsinki (FI)
(72) Inventor: Päiväläinen, Taru, 53100 Lappeenranta (FI); Pykäläinen, Nina, 53300 Lappeenranta (FI); Jokinen, Mikko, 50354 Hürth (DE); Clemens, Guido, 50354 Hürth (DE); Oberndorfer, Johann, 82178 Puchheim (DE); Mustonen, Kati, 53100 Lappeenranta (FI)
(74) Representative: Papula Oy

(57) **Abstract**

The invention relates to a reject based component for an asphalt composition, wherein the reject based component comprises at least one fiber based fraction which is formed from a deinking reject of the deinking plant. Further, the invention relates to a method for producing the reject based component, a pelletized component and a final product.

## Description

### FIELD OF THE INVENTION

The invention relates to a reject based component and its use. Further, the invention relates to a method and an apparatus for producing a reject based component. Further, the invention relates to a pelletized component. Further, the invention relates to a final product and components.

### BACKGROUND OF THE INVENTION

Known from prior art are different rejects in the waste paper treatment. Typically the rejects are waste, and they are incinerated or are disposed.

### OBJECTIVE OF THE INVENTION

The objectives of the invention are to disclose a new method for utilizing rejects from a waste paper treatment and for manufacturing new type products. Further, the objective of the invention is to disclose a new method for producing a reject based component for an asphalt composition.

### SUMMARY OF THE INVENTION

The reject based component according to the present invention is characterized by what is presented in claim 1.

The method for producing a reject based component is characterized by what is presented in claim 10.

The pelletized component is characterized by what is presented in claim 18.

The final product is characterized by what is presented in claim 19.

### BRIEF DESCRIPTION OF THE FIGURES

The accompanying figures, which are included to provide a further understanding of the invention and constitutes a part of this specification, illustrate some embodiments of the invention and together with the description help to explain the principles of the invention. In the figures:
Fig. 1 is one flow chart illustration of a method according to one embodiment of the present invention,
Fig. 2 is another flow chart illustration of a method according to one embodiment of the present invention, and
Fig. 3 is a flow chart illustration of a waste paper treatment.

### DETAILED DESCRIPTION OF THE INVENTION

In the present invention, a reject based component (6) for an asphalt composition is formed. The reject based component (6) comprises at least one fiber based fraction (5) which is formed from a deinking reject (1) of the deinking plant.

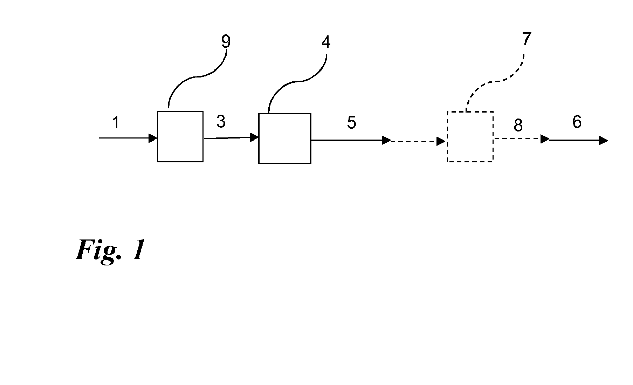

A process of the present invention is presented in figures 1 to 3.

In a method of the present invention for producing a reject based component for an asphalt composition, a fiber based fraction (5) is formed from a deinking reject (1) of the deinking plant, and the reject based component (6) is formed from the fiber based fraction (5).

In this context, the fiber based fraction (5) means any fiber based fraction which is formed from a deinking reject (1) of the deinking plant. The fiber based fraction may be recovered or separated from the deinking reject, or the deinking reject may be used as such directly as the fiber based fraction. The deinking reject may comprise one or more deinking reject, such as reject based material or reject flow, from one or more deinking treatment stages. The deinking reject means any reject, residue, residue flow and/or side flow from a deinking plant of a waste paper treatment. The deinking reject may be in the form of sludge, slurry, suspension or the like. In one embodiment, the deinking reject may be dewatered and/or dried. The fiber based fraction may be in the form of sludge, slurry, suspension, bulk, stuff, dried composition, solid composition, or their combination. Preferably, the fiber based fraction mainly consists of deinking reject.

In this context, the reject based component (6) may comprise any fiber based fraction (5). The reject based component may comprise one fiber based fraction or more than one fiber based fractions. Preferably, the reject based component comprises fibers from the deinking plant. The fiber based fraction may be used as such as the reject based component, or the fiber based fraction may be treated for forming the reject based component. The reject based component may be in the form of pressed product, briquettes, pellets, granulates, agglomerates, extrudates or their combination. Alternatively, the reject based component may be in the form of bulk, stuff, dried composition, dried fibers, solid composition or their combination. In one embodiment, the reject based component mainly consists of fiber based fractions. In one embodiment, the reject based component comprises at least one binder agent, e.g. in embodiments of pellets, granulates or extrudates. In one embodiment, the reject based component comprises an additive. In one embodiment, the reject based component includes 40 - 100 w-%, in one embodiment 70 - 100 w-%, in one embodiment 90 - 100 w-%, in one embodiment 95 - 100 w-%, fiber based fraction or fractions.

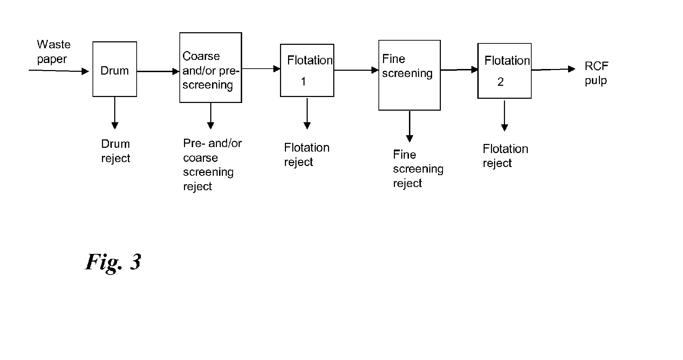

Preferably, the deinking reject (1) comprises reject or rejects, such as rejects and residues, from a deinking process of the waste paper treatment. One embodiment of typical waste paper treatment process is presented in figure 3. In one embodiment, the deinking reject comprises RCF reject (recycled fiber reject). In this context, RCF reject means any RCF reject or sludge or any combination of different RCF rejects from RCF process, i.e. from re-circulated fiber plant, in which waste paper is treated. The deinking reject may include minerals, e.g. in the form of CaCO₃ or clay or other composition, used in paper coating, filler and printing inks, and fibers, fines, sticky materials like starch, latex and other adhesive or adhesives, and other inorganic components and/or small amount of other components, preferably other reject components. In one embodiment, the deinking reject is high solid sludge in which dry solid content can be about 50 - 70 %. In one embodiment, the deinking reject is low solid sludge.

In one embodiment, the deinking reject (1) is a deinking sludge.

The deinking reject (1) may comprise any reject from the deinking plant or their mixtures. In one embodiment, the deinking reject (1) is selected from the group consisting of coarse screening reject, pre-screening reject, flotation reject, fine screening reject, dissolved air flotation reject and their combinations. In one embodiment, the deinking reject comprises coarse screening reject, pre-screening reject, first flotation reject, fine screening reject, dissolved air flotation reject and/or second flotation reject.

The pre-screening reject and/or coarse screening reject come from the pre- and/or coarse screens of the deinking plant. The pre- and coarse screening reject may include fibers, and fines, sticky materials, minerals, other inorganic components and their combinations. The flotation reject may include minerals, and fibers, fines, sticky materials, other inorganic components and their combinations. The fine screening reject may include fibers, and minerals, fines, sticky materials, other inorganic components and their combinations.

The dissolved air flotation reject includes residue or residues from the dissolved air flotation process in connection with the waste paper treatment and/or paper manufacturing. The residue from the dissolved air flotation process may be in the form of slurry, suspension or the like. The dissolved air flotation (DAF) process is a water treatment process that clarifies wastewaters or other waters by the removal of suspended matter such as solids or in some embodiment oils or other matter. The removal is achieved by dissolving air in the water or wastewater under pressure and then releasing the air at atmospheric pressure in a flotation tank or basin. The released air forms tiny bubbles which adhere to suspended matter causing the suspended matter to float to the surface of the water where it may then be removed by a skimming device. In the waste paper treatment the dissolved air flotation process is used for cleaning or purifying the process waters coming e.g. from RCF pulp thickening. In the paper manufacturing the dissolved air flotation process is used for cleaning or purifying the process waters. A water-carrying reject, e.g. process water or wastewater, from the waste paper treatment or paper manufacturing is supplied into the dissolved air flotation process, and the slurry or suspension residue from said process is called as a dissolved air flotation reject. In one embodiment, the dissolved air flotation process may be used in connection with the thickening after the flotation and/or the fine screening in the waste paper treatment.

In one embodiment, the deinking reject (1) is a fiber based reject, such as a fiber based reject stream, and the fiber based fraction is formed from the fiber based reject. Preferably the fiber based fraction is the fiber based reject, and the fiber based reject is used as such and directly as the fiber based fraction. In one embodiment, the fiber based reject is dried and the fiber based fraction is formed from the dried fiber based reject. In one embodiment, the fiber based reject is selected from the group consisting of coarse screening reject, pre-screening reject, fine screening reject and their combinations. In a preferred embodiment, the fiber based reject does not comprise a flotation reject. The reject based component may comprise one or more fiber based fractions.

In one embodiment, the deinking reject (1) can be dewatered to form the high solid sludge before forming of the fiber based fraction and/or before a drying. In one embodiment, the deinking reject may be treated in the dewatering by means of a gravitation table, disc filter, screw press and/or pressure apparatus or the like before the method of the present invention. In one embodiment, the dewatering is carried out by compressing.

In one embodiment, water, preferably free water, is removed from the deinking reject mechanically in the dewatering.

In one embodiment, the deinking reject (1) is dried in one or more steps for decreasing moisture content of the reject based component. In one embodiment, the deinking reject (1) is dried in one or more steps after the dewatering. Preferably, bound water is removed during the drying.

In one embodiment, the moisture of the deinking reject (3) is below 15 %, preferably below 10 %, more preferably below 7, most preferably below 5 %, after the drying and/or compressing. In one embodiment, the moisture of the deinking reject is between about 15 - 20 % after the drying and/or compressing. In one embodiment, the moisture of the deinking reject is between 1 - 20 %, in one embodiment between 2 - 12 %, in one embodiment 3 - 10 %, after the drying and/or compressing.

In one embodiment, the fiber based fraction (5) is formed from the dried deinking reject.

In one embodiment, the deinking reject (1) is dried by means of a drying device (2). The drying device may be any suitable drying device.

In one embodiment, the deinking reject (1) is dried by means of a drying device (2) in which the deinking reject is simultaneously dried and ground (9). In one embodiment, a fiber based fraction (5) is formed from a deinking reject (1) of the deinking plant by drying the deinking reject by means of a drying device in which the deinking reject is simultaneously dried and ground (9).

In one embodiment, the deinking reject is dried by means of a rotor mill or any other suitable drying device in which the deinking reject is simultaneously dried and ground, e.g. fiberized or refined. In one embodiment, the apparatus comprises at least one rotor mill (9) or other suitable drying device for drying a deinking reject (1). In one embodiment, the drying of the deinking reject is carried out by the rotor mill (9). Preferably, the rotor mill disintegrates aggregates of the deinking reject. When the drying is carried out in the rotor mill so then thermal and mechanical drying can be made at the same time which ensures the fiberizing and drying of material during the drying. Then no extra fiberizing steps are needed.

In one embodiment the drying device (2) can be selected from the group: gravitation table, disc filter, screw press, wire press, double wire press, indirect dryer, direct sludge dryer, paddle dryer, flash dryer, fluidized bed dryer, cyclone dryer, air dryer, air grinder, rotor mill, centrifugal mill, air turbulence mill, air turbulence dryer and other suitable dryers and other suitable mills, and their combinations. Also other drying devices are possible.

In one embodiment, the fiber based fraction (5) is separated from the dried deinking reject (3) by a separation device.

In one embodiment, the fiber based fraction (5) is separated from the dried deinking reject (3) by a separation device comprising a screen selected from a rotating screen and vibrating screen, and the reject based component (6) is formed from the separated fiber based fraction (5).

In one embodiment, the fiber based fraction (5) is separated from the dried deinking reject (3) by a separation device comprising a vibrating screen. In one embodiment, the fiber based fraction (5) is separated from the dried deinking reject (3) by any separation device comprising any vibrating screen. In one embodiment, the apparatus comprises at least one separation device comprising any vibrating screen.

In one embodiment, the fiber based fraction (5) is separated from the dried deinking reject (3) by a separation device comprising a rotating screen. In one embodiment, the fiber based fraction (5) is separated from the dried deinking reject (3) by any separation device comprising any rotating screen, e.g. cyclone screen, centrifugal screen, centrifugal sifter or any other rotating screen. In one embodiment, the apparatus comprises at least one separation device comprising any rotating screen, e.g. cyclone screen, centrifugal screen, centrifugal sifter or any other rotating screen.

In one embodiment, the fiber based fraction (5) is separated from the dried deinking reject (3) by a separation device comprising a rotating screen (4) with mesh size between 250 - 1000 µm. In one embodiment, the apparatus comprises at least one separation device comprising a rotating screen with mesh size between 250 - 1000 µm. In one embodiment, the fiber based fraction (5) is separated from the dried deinking reject (3) by a separation device comprising a rotating screen (4) with mesh size between 500 - 900 µm. In one embodiment, the apparatus comprises at least one separation device comprising a rotating screen with mesh size between 500 - 900 µm.

In one embodiment, the fiber based fraction (5) is separated from the dried deinking reject (3) by a separation device comprising a cyclone screen (4) with mesh size between 250 - 1000 µm. In one embodiment, the apparatus comprises at least one separation device comprising a cyclone screen with mesh size between 250 - 1000 µm. In one embodiment, the fiber based fraction (5) is separated from the dried deinking reject (3) by a separation device comprising a cyclone screen (4) with mesh size between 500 - 900 µm. In one embodiment, the apparatus comprises at least one separation device comprising a cyclone screen with mesh size between 500 - 900 µm.

In one embodiment, an apparatus of the present invention comprises at least one drying device in which the deinking reject is simultaneously dried and ground (9) for drying a deinking reject (1) of the deinking plant and at least one separation device comprising a screen selected from a rotating screen and vibrating screen for separating a fiber based fraction (5) from the dried deinking reject (3) in order to form the reject based component (6) from the separated fiber based fraction (5).

In one embodiment, the fiber based fraction (5) is a fiber fraction which is recovered or separated from the deinking reject. In one embodiment, the fiber fraction may be formed according to the method presented in patent publication WO 2014/001641. The fiber fraction may be formed from any deinking reject from the deinking plant.

In one embodiment, the deinking reject (1) is a fiber based reject which is used as the fiber based fraction (5) as such.

The reject based component (6) may be formed from one or more fiber based fractions. The fiber based fraction may be formed from any deinking reject which comprises fibers. The reject based component may be formed from one or more separated fiber fraction and/or fiber based reject. The reject based component can be used as a material component in a final product, preferably in an asphalt composition.

In one embodiment, the fiber based fraction (5) is pelletized or granulated, such as pelletized, granulated, briquetted, agglomerated or compressed with other technique, or extruded for forming a reject based component (6). In one embodiment, the reject based component (6) is in the form of pressed product, briquets, pellets, granulates, agglomerates, extrudates or their combination (8). In one embodiment, the apparatus comprises a pelletizing device (7), e.g. pellet press or other suitable pelletizing device, or a granulating device, or an extruder in order to form the pelletized reject based component (8). The pelletizing can be carried out by means of any suitable pelletizing, granulating or extruding technique and/or apparatus known to a man skilled in the art of pelletizing. The pelletized component is easy and cost-effective to transport, handling, treating and/or store. Further, the preservability of the pelletized component is good. In this context, the pelletizing means any pelletizing, granulating or extruding. In this context, the pelletized component means any pelletized, granulated or extruded component.

In one embodiment pitch oil, crude tall oil pitch, bitumen, wax or their combination is added as a binder into the fiber based fraction (5) before or during the pelletizing. In one embodiment, the reject based component (6) comprises pitch oil, crude tall oil pitch, bitumen, wax or their combinations as a binder. In one embodiment, the reject based component includes below 60 w-%, in one embodiment below 30 w-%, in one embodiment below 10 w-%, binder. In one embodiment, the reject based component includes 0.01 - 60 w-%, in one embodiment 0.01 - 30 w-%, in one embodiment 0.01 - 10 w-%, binder. The pitch oil may be any suitable pitch oil, e.g. pitch oil from diesel or middle distillate production. Crude tall oil pitch is crude tall oil pitch (CTO pitch) or the like. The bitumen may be any suitable bitumen, e.g. bitumen 50/70 or other suitable bitumen. The wax may be any suitable wax, e.g. wax from Fischer Tropsch process or other suitable wax.

In one embodiment, a pelletized component of the invention is in the form of pressed product, briquets, pellets, granulates, agglomerates, extrudates or their combination, and it comprises the reject based component of the invention so that the reject based component comprises at least one fiber based fraction.

In one embodiment, a pelletized component of the invention is in the form of pressed product, briquets, pellets, granulates, agglomerates, extrudates or their combination, and it comprises the reject based component of the invention so that the reject based component comprises at least one fiber based fraction and a binder selected from the group consisting of pitch oil, crude tall oil pitch, bitumen, wax or their combination.

The reject based component (6) is used as a component in an asphalt composition for manufacturing a final product. A final product of the present invention is the asphalt composition and it comprises a reject based component of the invention at least as a part of the final product. In this context, the asphalt composition may mean any asphalt based composition or bitumen based composition which includes bitumen, rock or stone material and fiber based material, and further also other asphalt components, such as fillers. In one embodiment, the asphalt composition contains below 10 w-%, in one embodiment below 5 w-%, reject based component. In one embodiment the asphalt composition contains 0.01 - 10 w-% reject based component, in one embodiment 0.01 - 5 w-% reject based component, in one embodiment 0.01 - 2 w-% reject based component. Preferably, the asphalt composition does not comprise water. Water disturbs the asphalt manufacturing. In one embodiment, moisture content of the reject based component is below 5 %, in one embodiment below 4 %, in one embodiment below 3 %.

In one embodiment, the final product is an asphalt composition which comprises the reject based component of the invention below 5 w-%, preferably 0.01 - 2 w-%, at least as a part of the final product.

In one embodiment, the asphalt composition is a porous asphalt composition. In one embodiment, the asphalt composition is a stone mastic asphalt composition. In one embodiment, the stone mastic asphalt composition comprises 0.01 - 1 w-%, in one embodiment about 0.3 - 0.5 w-%, fibers. In one embodiment, the stone mastic asphalt composition comprises 0.01 - 5 w-%, in one embodiment about 0.3 - 2 w-%, reject based component. In one embodiment, the asphalt composition is a stone mastic asphalt composition, and the reject based component is used as a stabilizing agent in the asphalt composition.

In one embodiment the reject based component is mixed with other components for forming a final asphalt composition. In one embodiment, the reject based component is mixed with the other components in a mixing step, preferably in a mixing device. In one embodiment for forming a stone mastic asphalt composition, rock or stone material and reject based material and/or fibers, and alternatively also filler, are mixed in a first mixing step, preferably in a dry mixing step, and bitumen is added and mixed in a second mixing step, preferably in a wet mixing step.

Preferably, fiber material of the asphalt is replaced with the reject based component of the invention. In one embodiment, the reject based component of the invention is used as a stabilizing agent in the asphalt composition to prevent sedimentation of the asphalt mixture during transportation.

The reject based component according to the invention for using in an asphalt composition comprises fibers recovered or separated from the deinking reject of the deinking plant or fiber based reject of the deinking plant.

The reject based component of the invention may be used as such in different asphalt compositions. In one embodiment, the reject based component may be treated, e.g. dried or pelletized, before the using in the asphalt composition.

An advantage of the invention is that different fiber based rejects from a waste paper treatment can be utilized. The materials of the deinking rejects can be reused and then environmental load decreases.

In the present invention, different fiber based fractions can be utilized in the asphalt compositions. The present invention provides components and products with good quality. The present invention offers a possibility to prepare the products from the rejects cost-effectively and energy-effectively. By means of the reject based component can be replaced at least a part of the components in the asphalt. The method according to the present invention is easy and simple to realize as a production process.

The reject based component according to the present invention is suitable for use in the manufacture of the different final asphalt products.

### EXAMPLES

The invention is described in more detail by the following examples with reference to accompanying figures.

### Example 1

In this example, which is shown in Fig. 1, a reject based component (6) is formed.

A fiber based fraction (5) is formed from a deinking reject (1) of the deinking plant by drying the deinking reject by means of a rotor mill (9) and by separating the fiber based fraction (5) from the dried deinking reject (3) by cyclone screen (4) with mesh size between 500 - 900 µm. The reject based component (6) is formed from the separated fiber based fraction (5). The separated fiber based fraction (5) is a fiber fraction. The fiber based fraction (5) may be pelletized for forming the pellets (8) of the reject based component (6).

The apparatus of Fig. 1 comprises one rotor mill (9) for drying a deinking reject (1) of the deinking plant and one cyclone screen (4) with mesh size between 500 - 900 µm for separating a fiber based fraction (5) from the dried deinking reject (3). Further, the apparatus may comprise a pelletizing device, such as pellet press, (7) for pelletizing fiber based fraction and forming a reject based component.

### Example 2

In this example, an asphalt composition is formed. The asphalt composition comprises a reject based component formed according to example 1.

The reject based component consists of a fiber fraction. The asphalt composition includes below 1 w-%, in one test about 0.3 w-%, reject based component and about 99 w-% other components.

Length weighted fiber length of the fiber fraction is about 2 mm. Ash 525 °C (mod. ISO 1762) of the fiber fraction is about 30 %. Gross calorific value (mod. ISO 1928) of the fiber fraction is 13.4 MJ/kg. Moisture of the reject based component, which is not compressed, is below 5 %.

In the composition fiber material of the asphalt is replaced with the reject based component of the invention. Said composition is compared with a corresponding reference composition containing commercial asphalt fibers.

It is observed that the reject based component suits well for the asphalt composition, and the reject based component improves the stability in the asphalt composition to prevent sedimentation of the asphalt mixture during transportation. Further, it is observed that fiber material of the asphalt composition can be replaced with the reject based component.

### Example 3

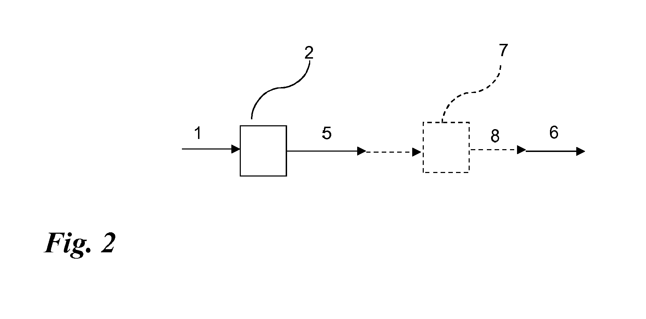

In this example, which is shown in Fig. 2, a reject based component (6) is formed.

A fiber based fraction (5) is formed from a deinking reject (1) of the deinking plant by drying the deinking reject in a drying device (2). The deinking reject is a fiber based reject or a combination of different fiber based rejects of the deinking plant, such as coarse screening reject and fine screening reject.

The fiber based fraction (5) may be pelletized for forming the pellets (8) of the reject based component (6). The apparatus may comprise a pelletizing device, such as pellet press, (7) for pelletizing fiber based fraction and forming a reject based component. Pitch oil, crude tall oil pitch (CTO pitch), bitumen, wax or their combination is added as a binder into the fiber based fraction (5) before or during the pelletizing.

It is observed from the tests that different deinking rejects can be used in manufacturing of the asphalt compositions. The product has good properties, such as improved stability. Further, reject handling costs can be decreased by means of the invention.

The reject based component according to the present invention is suitable in different embodiments to be used in different asphalt products.

The invention is not limited merely to the example referred to above; instead many variations are possible within the scope of the inventive idea defined by the claims.

## Claims

1. A reject based component for an asphalt composition, wherein
- the reject based component comprises at least one fiber based fraction which is formed from a deinking reject of the deinking plant.

2. The reject based component according to claim 1, wherein the deinking reject has been dried for decreasing moisture content of the reject based component.

3. The reject based component according to claim 1 or 2, wherein the deinking reject has been dried by means of a drying device in which the deinking reject is simultaneously dried and ground.

4. The reject based component according to claim 1 to 3, wherein the fiber based fraction has been separated from the dried deinking reject by a separation device comprising a screen selected from a rotating screen and vibrating screen.

5. The reject based component according to any one of claims 1 to 4, wherein the deinking reject is selected from the group consisting of coarse screening reject, pre-screening reject, flotation reject, fine screening reject, dissolved air flotation reject and their combination.

6. The reject based component according to any one of claim 1 to 3, wherein the deinking reject is a fiber based reject, and the fiber based fraction is formed from the fiber based reject.

7. The reject based component according to claim 6, wherein the fiber based reject is selected from the group consisting of coarse screening reject, pre-screening reject, fine screening reject, and their combination.

8. The reject based component according to any one of claims 1 to 7, wherein the reject based component is in the form of pressed product, briquets, pellets, granulates, agglomerates, extrudates or their combination.

9. The reject based component according to claim 8, wherein the reject based component comprises pitch oil, crude tall oil pitch, bitumen, wax or their combinations as a binder.

10. A method for producing a reject based component for an asphalt composition, wherein the method comprises
- forming a fiber based fraction (5) from a deinking reject (1) of the deinking plant, and
- forming the reject based component (6) from the fiber based fraction (5).

11. The method according to claim 10, wherein the deinking reject is dried for decreasing moisture content of the reject based component.

12. The method according to claim 10 or 11, wherein the deinking reject is dried by means of a drying device in which the deinking reject is simultaneously dried and ground (2).

13. The method according to claim 12, wherein the deinking reject is dried by means of a rotor mill (2).

14. The method according to any one of claims 11 to 13, wherein the fiber based fraction (5) is separated from the dried deinking reject (3) by a separation device comprising a screen selected from a rotating screen and vibrating screen.

15. The method according to claim 10 to 12, wherein the deinking reject (1) is a fiber based reject, and the fiber based fraction (5) is formed from the fiber based reject.

16. The method according to any one of claims 10 to 15, wherein the fiber based fraction (5) is pelletized, granulated or extruded for forming a reject based component (6).

17. The method according to claim 16, wherein pitch oil, crude tall oil pitch, bitumen, wax or their combination is added as a binder into the fiber based fraction (5).

18. A pelletized component, wherein the pelletized component is in the form of pressed product, briquets, pellets, granulates, agglomerates, extrudates or their combination and the pelletized component comprises the reject based component according to any one of the preceding claims so that the reject based component comprises at least one fiber based fraction and a binder selected from the group consisting of pitch oil, crude tall oil pitch, crude tall oil pitch bitumen, wax or their combination.

19. A final product, wherein the final product is an asphalt composition which comprises the reject based component according to any one of the preceding claims below 5 w-%, preferably 0.01 - 2 w-%, at least as a part of the final product.

20. The final product according to claim 19, wherein the asphalt composition is a stone mastic asphalt composition, and the reject based component is used as a stabilizing agent in the asphalt composition.
